# EUROPÄISCHE PATENTSCHRIFT

(11) **EP 2 658 736 B1**
(45) Veröffentlichungstag und Bekanntmachung des Hinweises auf die Patenterteilung: **21.08.2019**
(21) Anmeldenummer: 11804495.7
(22) Anmeldetag: 15.12.2011
(51) Int. Cl.: B60J 10/18, B60J 10/30, B60J 10/70

(54) **ABDICHTUNGSPROFIL ZUM ANSCHLUSS EINER WASSERKASTENABDECKUNG AN EINE SCHEIBE SOWIE VERFAHREN ZUM ANSCHLUSS EINER WASSERKASTENABDECKUNG**
SEALING PROFILE FOR CONNECTING A WATER TANK COVER TO A WINDOW PANE AND CORRESPONDING ASSEMBLY METHOD
JOINT D'ÉTANCHÉITÉ POUR RACCORDER UN COUVERCLE DE BOÎTE À EAU À UNE VITRE DE VÉHICULE ET MÉTHODE D'ASSEMBLAGE CORRÉSPONDANTE

(30) Priorität: 30.12.2010 DE 102010056495
(43) Veröffentlichungstag der Anmeldung: 06.11.2013
(73) Patentinhaber: Rehau AG + Co, 95111 Rehau (DE)
(72) Erfinder: TAUWALDT, Frank, 95197 Schauenstein (DE); CHLEBECEK, Wolfgang, 95111 Rehau (DE)
(86) Internationale Anmeldenummer: PCT/EP2011/006326
(87) Internationale Veröffentlichungsnummer: WO 2012/089309

(56) Entgegenhaltungen:
- EP-B1- 1 280 675
- EP-B1- 1 634 753
- DE-A1-102008 003 252
- DE-A1-102009 010 015
- DE-A1-102009 010 032
- DE-U1-202008 006 986
- DE-U1-202008 009 712

## Beschreibung

Die Erfindung betrifft ein Abdichtungsprofil zum Anschluss einer Wasserkastenabdeckung an eine Scheibe eines Kraftfahrzeuges mit den Merkmalen des Oberbegriffs des Patentanspruchs 1.

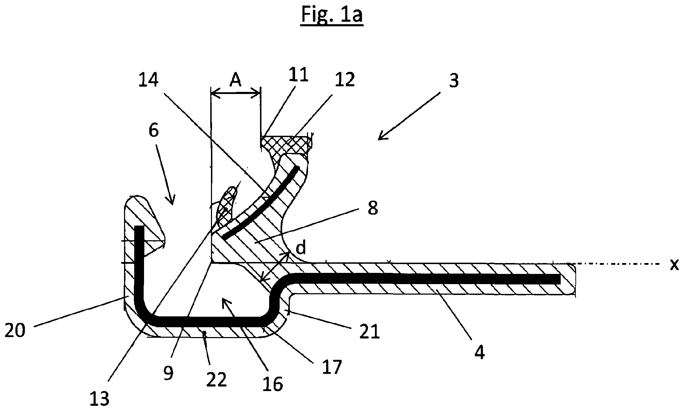

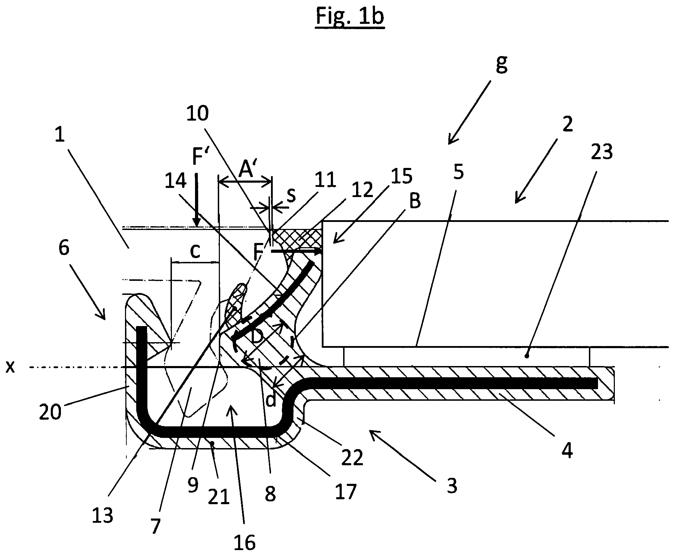

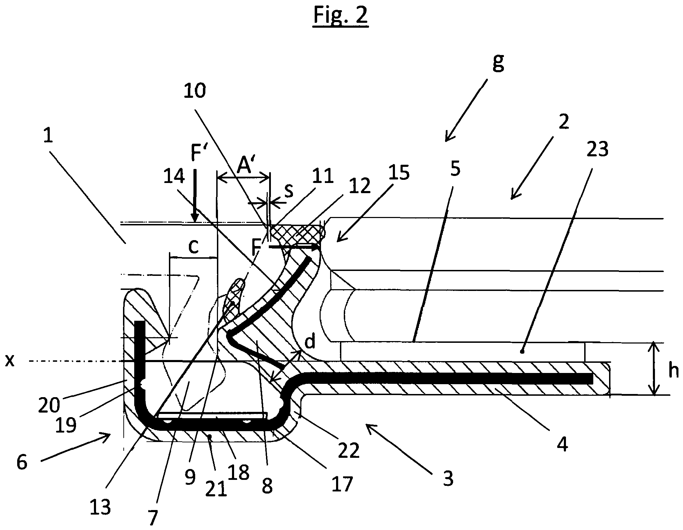

Ein Abdichtungsprofil mit den eingangs beschriebenen Merkmalen ist beispielsweise aus der EP 1 280 675 B1, der DE 20 2008 009 712 U1 sowie der DE 10 2009 010 015 A1 bekannt. Bei diesem Stand der Technik ist der Stützkörper elastisch ausgebildet, um eine Nachgiebigkeit gegenüber der Scheibe zu gewährleisten. Die Nachgiebigkeit wird entweder durch eine schlanke Geometrie des Stützkörpers mit einer Auskehlung im Rastbereich und filigranem Anschluss an den Halteschenkel sicher gestellt (vgl. Figur 4) oder aber durch den Einsatz eines entsprechend elastischen Materials (sh. Figuren 1 und 2). Die Elastizität des Stützkörpers wird in der Schrift an mehreren Stellen als wichtige Eigenschaft hinsichtlich der Funktion des Abdichtungsprofils hervorgehoben.

Die EP 1 634 753 B1 zeigt in Analogie zur EP 1 280 675 B1 einen schlanken Stützkörper, der somit ebenfalls eine entsprechende Elastizität besitzt. Ähnliche Anordnungen sind beispielsweise in der DE 10 2009 010 032 A1 sowie der DE 10 2008 003 252 A1 beschrieben. Zwar weist in mehreren der genannten Schriften der Stützkörper eine Armierung in Form einer Metallfolie auf, jedoch ist der Stützkörper in seiner Gesamtheit trotzdem elastisch ausgebildet, da der Anschluss zum Halteschenkel filigran dimensioniert ist. Es ist daher stets eine Nachgiebigkeit des gesamten Stützkörpers gegenüber der Scheibe gewährleistet.

Abdichtungsprofile mit den eingangs beschriebenen Merkmalen sind insbesondere hinsichtlich des Anschlusses einer Wasserkastenabdeckung an den unteren Rand einer Windschutzscheibe eines Kraftfahrzeuges von Bedeutung. Hierbei wird das Abdichtungsprofil zunächst am unteren Randbereich der Windschutzscheibe befestigt, beispielsweise angeklebt, und dann die Windschutzscheibe zunächst in das Fahrzeug eingebaut. Um eine sichere Abdichtung des Übergangs zur Windschutzscheibe hin zu gewährleisten, muss das Abdichtungsprofil bei der Montage an der Scheibe mit einer vergleichsweise hohen Kraft gegen den unteren Scheibenrand gepresst werden. Aufgrund der beschriebenen Elastizität des Stützkörpers kommt es hierdurch zu einer Verformung des Stützkörpers mit der Wirkung, dass dieser sich zur Wasserkastenabdeckung hin etwas neigt und dadurch sich die Geometrie des montierten Halteprofils im Aufnahmebereich des Rastelementes bleibend verändert. Dies hat zur Folge, dass das Halteprofil nunmehr im Rastbereich keine der konstruktiven Auslegung konforme Gestalt mehr aufweist und sich dadurch die Kräfte, welche zur Einrastung des Anbauteils erforderlich sind, deutlich erhöhen. In diesem Zusammenhang ist zu beachten, dass die Rastverbindung zwischen Halteprofil und Anbauteil nicht zu lose dimensioniert werden darf, da ansonsten die Gefahr eines ungewollten Herausspringens der Wasserkastenabdeckung aus dem Rastprofil bei Fahrzeugerschütterungen besteht. Aufgrund der erforderlichen hohen Kräfte zum Einrasten des Rastelementes sind bei den mit dieser Aufgabe beauftragten Montagearbeitern häufig krankheitsbedingte Ausfälle zu beklagen. Insbesondere treten Verletzungen im Bereich der Daumen auf, welche zum Einpressen des Anbauteils benutzt werden. In der Praxis wird daher der Einbauvorgang oftmals mit Werkzeugen (Hammer und dergleichen) unterstützt. Dies führt jedoch dann häufig zu einem Abriss des Abdichtungsprofils oder gar einem Bruch der bereits im Fahrzeug eingebauten Scheibe, wobei in beiden Fällen eine sehr kostenaufwändige Ausglasung und ein Neueinbau der Scheibe erforderlich sind.

Im Stand der Technik wurden bereits einige Maßnahmen vorgeschlagen, um trotz Sicherstellung einer vergleichsweise hohen Demontagekraft (zwecks Vermeidung eines ungewollten Lösens der Verbindung durch Fahrzeugvibrationen) eine möglichst geringe Montagekraft während des Einrastvorganges sicherzustellen. So wird beispielsweise in der DE 20 2008 006 986 U1 vorgeschlagen, innerhalb des Rastprofils ein zusätzliches Raststück vorzusehen, welches den Montagevorgang möglichst wenig behindern, jedoch einer ungewollten Demontage aufgrund von Fahrzeugvibration nachhaltig entgegenwirken soll. An dem Grundprinzip des elastischen Stützkörpers wird in dieser Schrift, wie den entsprechenden Zeichnungen zu entnehmen ist und worauf in der Beschreibung an mehreren Stellen ausdrücklich hingewiesen wird, unverändert festgehalten. Nachteilig bei dieser Lösung ist, dass ein sauberes, "sattes" Einrasten nicht mehr gewährleistet ist, welches dem Monteur eine korrekte Montage der Wasserkastenabdeckung akustisch mitteilt. Darüber hinaus besteht die Gefahr, dass es bei einer reparatur- oder wartungsbedingten Demontage der Wasserkastenabdeckung es zu einer Beschädigung bzw. sogar zu einem Abriss des Raststückes kommen kann, wodurch dessen Funktion nicht mehr sicher gestellt ist.

Im Zusammenhang mit der beschriebenen Problematik wird in der DE 20 2010 005 776 U1 vorgeschlagen, im Randbereich des Rastprofils eine Kombination aus härteren und weicheren Materialien einzusetzen. Auch bei dieser Schrift wird am Grundprinzip des elastischen Stützkörpers unverändert festgehalten. Die vorbekannte Vorrichtung löst die beschriebenen Probleme ebenfalls nicht zufriedenstellend.

Vor diesem Hintergrund liegt der Erfindung die Aufgabe zugrunde, ein Abdichtungsprofil mit den eingangs beschriebenen Merkmalen anzugeben, welches einerseits sicher und dauerhaft eine möglichst geringe erforderliche Kraft zum Einrasten des Rastelementes im Rastprofil sicherstellt, andererseits aber aufgrund einer deutlich größeren Demontagekraft ein ungewolltes Lösen der Rastverbindung aufgrund von Fahrzeugvibrationen sicher vermeidet.

Erfindungsgemäß wird diese Aufgabe durch die Merkmale des Patentanspruchs 1 gelöst. Die Erfindung beruht auf der Erkenntnis, dass eine Abkehr von der im Stand der Technik stets als erforderlich angesehenen Elastizität des Stützkörpers einerseits die gewünschte geringe Montagekraft und andererseits die vergleichsweise hohe Demontagekraft sicherstellt. Über eine entsprechende Gestaltung von Rastprofil und Stützkörper kann ein vergleichsweise einfaches Einführen des Rastelementes bei gleichzeitig hoher Demontagekraft gewährleistet werden. Aufgrund der stabilen L-Form des von Stützkörper und Halteschenkel gebildeten Aufnahmebereichs für die Scheibe wird die konstruktiv vorgegebene Geometrie von Rastprofil und Stützkörper erfindungsgemäß durch die Montage des Abdichtungsprofils an der Scheibe nicht nachteilig beeinflusst, so dass auch unter Berücksichtigung der vorhandenen Toleranzbereiche die vorgegebene Geometrie des Halteprofils durch den Montagevorgang des Haltesprofils an der Scheibe nicht negativ beeinflusst wird. Somit ist erfindungsgemäß gewährleistet, dass die konstruktive Auslegung von Rastprofil und Stützkörper auch jener Gestalt dieser Elemente entspricht, welche tatsächlich bei der Montage der Wasserkastenabdeckung vorliegt. Eine durch Befestigung des Abdichtungsprofils an der Scheibe bedingte, den Einrastvorgang behindernde Deformation des Stützkörpers ist nicht mehr zu befürchten. Vorzugsweise reduziert sich das Abstandsmaß A bei der genannten Anpresskraft von 100 N / 50 mm Profillänge um weniger als 25%, z.B. < 20 %, weiterhin beispielsweise < 15 %, insbesondere < 10 %, besonders bevorzugt < 5 %, ganz besonders bevorzugt < 3 %, z.B. < 1 % auf das Abstandsmaß A'. Stützkörper und Halteschenkel bilden somit erfindungsgemäß gemeinsam einen Anschlagswinkel zur Aufnahme des unteren Randbereichs der Scheibe, der bei der Befestigung des Halteprofils an der Scheibe formstabil bleibt.

Die erfindungsgemäße Lehre zeichnet sich dadurch aus, dass die Montage der Wasserkastenabdeckung mit einem deutlich reduzierten Kraftaufwand erfolgen kann und hierdurch die Gefahr krankheitsbedingter Ausfälle des Verbaupersonals aufgrund überlasteter Finger merklich reduziert wird. Auch die Gefahr eines Abreißens des Halteprofils bzw. eines Bruchs der Scheibe während der Montage des Anbauteils ist wegen der lediglich geringen erforderlichen Montagekraft deutlich kleiner. Die Erfindung ermöglicht eine kompakte Bauweise sowie eine stabile und störungsarme Montage des Halteprofils an der Scheibenunterkante beim Glashersteller und/oder Scheibenkonfektionär. Erfindungsgemäß wird der starre Applikationsbereich des Abdichtungsprofils an die Scheibe vom elastischen Verrastbereich zum Anschluss des Anbauteils entkoppelt. Die Erfindung ermöglicht eine Montage des Anbauteils mit einer Kraft von in der Regel weniger als 100 N, vorzugsweise < 70 N, besonders bevorzugt < 50 N, z.B. < 30 N, ganz besonders bevorzugt < 20 N, jeweils bezogen auf 50 mm Halteprofillänge. Die Demontagekraft ist hingegen um mindestens 50 % höher als die Montagekraft, vorzugsweise mindestens 100 %. Die Demontagekraft ist vorzugsweise größer als 60 N, insbesondere > 80 N, z. B. > 120 N, insbesondere > 150 N, jeweils bezogen auf 50 mm Halteprofillänge. Gleichzeitig beträgt zur Sicherstellung einer problemlosen Wartungs- bzw. Reparaturarbeit die Demontagekraft zweckmäßigerweise maximal 200 N / 50 mm Halteprofillänge.

Zur Sicherstellung des starren Stützkörpers gemäß Anspruch 1 sind mehrere Maßnahmen denkbar. So kann beispielsweise der Stützkörper als balliges Element ohne Auskehlung im Rastbereich ausgebildet sein. Hierbei wird also durch eine entsprechende Materialanhäufung das gewünschte starre Verhalten des Stützkörpers sichergestellt. Ferner kann das optionale Armierungselement als, insbesondere U- oder V-förmige, Metalleinlage oder als faserverstärktes Kunststoffprofil ausgebildet sein. Im Stand der Technik ist die Verwendung einer metallischen Armierungseinlage zwar bekannt, jedoch stets nur zu dem Zweck, die Elastizität des Stützkörpers als Einheit sicherzustellen. Entsprechend wurde im Stand der Technik der Stützkörper in diesem Fall stets filigran dimensioniert, so dass die Gesamtelastizität unverändert gewährleistet ist. Alternativ oder aber auch ergänzend zur Metalleinlage kann als Armierungseinlage ein faserverstärktes Kunststoffprofil eingesetzt werden, wobei als Verstärkungsmaterialien insbesondere Mineral- (z. B. Glas-) und/oder Carbon- und/oder Aramid- und/oder Basaltfasern verwendet werden können. Denkbar ist auch eine Koextrusion mit einem härteren Kunststoffmaterial als Kern. Als Material für das faserverstärkte Kunststoffprofil kann ferner auch ein Faserverbundwerkstoff zum Einsatz kommen.

Erfindungsgemäß weist der Stützkörper im Anschlussbereich zum Halteschenkel eine Dicke von mindestens 1,3 mm, vorzugsweise mindestens 1,5 mm bzw. mindestens 1,7 mm auf. Hierdurch erfolgt eine Abkehr von der im Stand der Technik üblichen filigranen Anbindung des Stützkörpers an den Halteschenkel, um die Elastizität des Stützkörpers sicherzustellen. Erfindungsgemäß ist ferner der Stützkörper derart massiv ausgebildet, dass ein gedachter Zylinder mit einem Durchmesser von 1,5 mm, vorzugsweise 1,7 mm, insbesondere 2 mm, z.B. 2,2 mm, vom Stützkörper vollständig umhüllt wird. Hiermit verbundene Materialanhäufungen geben dem Stützkörper ebenfalls die gewünschte Stabilität.

Zweckmäßigerweise sind Halteschenkel und Rastprofil über eine gemeinsame Armierungseinlage, insbesondere aus Metall, miteinander verbunden. Die Armierungseinlage kann hierbei im Bereich des Rastprofils lediglich bereichsweise vom Kunststoffmaterial umspritzt sein. Die lediglich bereichsweise Umspritzung mit Kunststoffmaterial gewährleistet eine hohe Nachgiebigkeit des Rastprofils. Je nach Anforderungen an die Montage des Anbauteils kann zweckmäßig sein, dass im inneren Bodenbereich des Rastprofils eine separate Kunststoffeinlage vorgesehen ist. Die Einlage kann beispielsweise auch zum Korrosionsschutz dienen. Zwecks gezielter Einstellung bzw. Erhöhung der Elastizität im Bereich des Rastprofils kann die Armierungseinlage ferner über sickenförmige Vertiefungen verfügen.

Als besonders zweckmäßig hat es sich erwiesen, dass das Rastprofil im Querschnitt eine winklige U-Form aufweist. Hierdurch stehen der motorseitige Klemmschenkel des Rastprofils sowie der innenraumseitige Klemmschenkel des Rastprofils im wesentlichen senkrecht auf dem Klemmkanalboden. Insgesamt gewährleistet diese konstruktive Gestaltung einen möglichst großen Montagehebel hinsichtlich des Rastprofils und damit die gewünschte Nachgiebigkeit des Rastprofils, was sich vorteilhaft auf die erforderliche Montagekraft beim Einrastvorgang auswirkt.

Gegenstand der Erfindung ist ferner ein Verfahren zum Anschluss eines Anbauteils gemäß Anspruch 9. Vorzugsweise reduziert sich das Abstandsmaß A bei diesem Verfahren um weniger als 25%, z.B. < 20 %, weiterhin beispielsweise < 15 %, insbesondere < 10 %, besonders bevorzugt < 5 %, ganz besonders bevorzugt < 3 %, z.B. < 1 % auf das Abstandsmaß A'. Weiterhin erfolgt bei diesem Verfahren vorzugsweise das Einrasten des Rastelementes im Rastprofil mit einer Kraft senkrecht zur Halteschenkelebene von weniger als 100 N, vorzugsweise < 70 N, besonders bevorzugt < 50 N, z.B. < 30 N, ganz besonders bevorzugt < 20 N, jeweils bezogen auf 50 mm Halteprofillänge.

Im Folgenden wird die Erfindung anhand einer lediglich ein Ausführungsbeispiel darstellenden Zeichnung ausführlich erläutert. Es zeigen schematisch:
- Fig. 1: ein erfindungsgemäßes Abdichtungsprofil in der Querschnittsdarstellung im unmontierten Zustand,
- Fig. 1b: das in Fig. 1a dargestellte Abdichtungsprofil im montierten Zustand und
- Fig. 2: ein weiteres erfindungsgemäßes Abdichtungsprofil.

Die Fig. 1a und 1b zeigen ein Abdichtungsprofil zum Anschluss einer Wasserkastenabdeckung 1 an eine Windschutzscheibe 2 eines (nicht näher dargestellten) Kraftfahrzeuges. Das Abdichtungsprofil weist ein extrudiertes Kunststoff-Halteprofil 3 auf. Dieses besitzt einen Halteschenkel 4, der im Montagezustand an der unteren, dem Kraftfahrzeugboden zugewandten, Oberfläche 5 der Scheibe 2 anliegt, ein Rastprofil 6 zur Aufnahme eines Rastelementes 7 der Wasserkastenabdeckung 1 und ein im Montagezustand zwischen Wasserkastenabdeckung 1 und Windschutzscheibe 2 angeordneten Stützkörper 8. Der Stützkörper 8 weist eine im Montagezustand am Rastelement 7 anliegende Anlagefläche 9 und eine im Montagezustand der Oberkante 10 der Wasserkastenabdeckung 1 unmittelbar benachbarte und dieser Oberkante 10 zugewandte Stirnfläche 11 auf. Im unmontierten Zustand (Fig. 1a) weisen Anlagefläche 9 und Stirnfläche 11 ein minimales Abstandsmaß A parallel zur Halteschenkelebene x auf, das sich - je nach Ausführungsform - üblicherweise im Bereich von 1,5 bis 3 mm bewegt. Der Begriff "minimal" meint, dass bei schräg zur Halteschenkelebene x angeordneter bzw. gekrümmter Anlage- und/oder Stirnfläche 9,11 jenes Maß als Abstandsmaß A definiert wird, welches den geringsten Abstand zwischen den beiden Flächen 9, 11 parallel zur Halteschenkelebene x definiert. Im montierten Zustand (Fig. 1b) schließen die Wasserkastenabdeckung 1, der Stützkörper 8 sowie die Windschutzscheibe 2 an ihrer Oberseite im wesentlichen bündig ab, so dass die Funktion eines (nicht dargestellten) Scheibenwischers der Windschutzscheibe 2 nicht beeinträchtigt wird. Die beschriebene Anordnung ist aufgrund der üblichen Ausrichtung der am Fahrzeug montierten Windschutzscheibe 2 schräg zur Horizontalen ausgerichtet, was durch die in der Fig. 1b eingezeichneten Richtung der Erdbeschleunigung g angedeutet ist. Der Stützkörper 8 weist zwei Dichtlippen 12, 13 aus einem weichelastischen Material auf, wobei die an der Stützkörperoberkante angeordnete obere Dichtlippe 12 - welche den Übergang zur Windschutzscheibe 2 abdichtet - die Stirnfläche 11 aufweist. Im eingebauten Zustand befindet sich zwischen der Oberkante 10 der Wasserkastenabdeckung 1 und der Stirnfläche 11 ein Spalt, dessen Breite s sich - je nach Ausführungsform - im Bereich von 0,05 mm bis 0,8 mm bewegt. Bei der Montage von Halteprofilen gemäß dem Stand der Technik drückt hingegen aufgrund der beschriebenen Verformung des Stützkörpers regelmäßig die Wasserkastenabdeckung gegen die obere Dichtlippe (so dass kein Spaltmaß s vorliegt) und die Montagekraft erhöht sich hierdurch deutlich. Die andere, untere Dichtlippe 13 dichtet den Übergang zur Wasserkastenabdeckung 1 ab und dient zum Ausgleich von Toleranzen der Wasserkastenabdeckung 1. Zudem stellt die Dichtlippe 13 bei der Montage der Wasserkastenabdeckung 1 einen Einfederweg bis zur Verrastung des Rastelementes 7 im Halteprofil 6 sicher. Das in der Figur 1b eingezeichnete Maß c definiert die Öffnungsweite des Rastprofils 6 für die Aufnahme des Rastelementes 7 und beträgt - je nach Ausführungsform - 1,5 bis 2,5 mm.

Der in Fig. 1b dargestellte Stützkörper 8 ist aufgrund entsprechender Dimensionierung und aufgrund eines innerhalb des Stützkörpers 8 angeordneten Armierungselementes 14 als starres Element ausgebildet, derart dass sich das Abstandsmaß A bei einem Anpressen des Stützkörpers 8 an den unteren Scheibenrand 15 mit einer Kraft F von 100 N / 50 mm (= 20 N / cm) Halteprofillänge um weniger als 15 % auf das Abstandsmaß A' reduziert. Dies bedeutet beispielsweise bei einem Abstandsmaß A = 2,5 mm eine Reduzierung um weniger als 0,375 mm auf A' > 2,125 mm. Aufgrund der Geometrie des Stützkörpers 8 liegt dieser nur in seinem oberen rechten Randbereich am im Querschnitt ebenen, senkrecht zur Halteschenkelebene x ausgerichteten unteren Scheibenrand 15 an. Hierdurch bilden Halteschenkel 4 und Stützkörper 8 gemeinsam eine formstabile L-förmige Aufnahme für den unteren Randbereich der Scheibe 2 und gewährleisten damit ein leichtes Einrasten des Rastelementes 7 im Rastprofil 6 bei der anschließenden Montage der Wasserkastenabdeckung 1. Die Beeinflussung des Abstandsmaßes A' durch das Einrasten der Wasserkastenabdeckung 1 ist vernachlässigbar, d.h., dass die (erfindungsgemäß sehr geringe) Reduzierung des Abstandsmaßes A auf das Abstandsmaß A' allein aus der Anpressung des Halteprofils 3 an den unteren Scheibenrand 15 resultiert. Stützkörper 8 und Halteschenkel 4 bilden somit gemeinsam einen Anschlagswinkel zur Aufnahme des unteren Randbereichs der Windschutzscheibe 2, der bei der Befestigung des Halteprofils 3 an der Windschutzscheibe 2 formstabil bleibt. Entsprechend kommt es durch die Befestigung des Halteprofils 3 an der Scheibe 2 nicht bzw. nur in sehr geringem Maße zu einer Veränderung der Geometrie des Halteprofils 3, so dass der Einrastvorgang auch genau so durchgeführt werden kann, wie er durch die konstruktive Gestaltung von Rastprofil 6 und Stützkörper 8 ausgelegt worden ist. Insbesondere wird hierdurch vermieden, dass die Wasserkastenabdeckung 1 bei der Montage gegen die obere Dichtlippe 12 drückt, wodurch sich die erforderliche Montagekraft erheblich erhöhen würde.

Der Stützkörper 8 ist in den Figuren als balliges Element ohne Auskehlung im Rastbereich 16 ausgebildet. Das Armierungselement 14 ist in beiden Figuren als Metalleinlage, z.B. aus Aluminium, mit einer Stärke von 0,1 bis 0,3 mm ausgebildet, welches in Fig. 2 einen V-förmigen Querschnitt aufweist. Alternativ oder ergänzend ist in diesem Zusammenhang auch ein Armierungselement in Form eines faserverstärkten Kunststoffprofils möglich. Der Stützkörper 8 weist im Anschlussbereich zum Halteschenkel 3 eine Dicke d von mindestens mindestens 1,5 mm auf. Ferner ist der Stützkörper 8 derart massiv ausgebildet, dass ein gedachter Zylinder B mit einem Durchmesser D von 2 mm vom Stützkörper 8 vollständig umhüllt wird (sh. Fig. 1b).

Den Figuren ist ferner zu entnehmen, dass Halteschenkel 4 und Rastprofil 6 über eine gemeinsame metallische Armierungseinlage 17 miteinander verbunden sind, wobei die Armierungseinlage 17 im Bereich des Rastprofils 6 lediglich bereichsweise vom Kunststoffmaterial umspritzt ist. In Fig. 2 ist im inneren Bodenbereich des Rastprofils 6 eine separate Kunststoffeinlage 18 vorgesehen. Darüber hinaus weist die Armierungseinlage in Fig. 2 sickenförmige Vertiefungen 19 auf, mit denen die Elastizität des Rastprofils 6 gezielt eingestellt werden kann. Die Armierungseinlage 17 besteht ebenfalls aus Metall und weist (außerhalb des Sickenbereiches) eine Stärke von 0,3 bis 0,5 mm auf. Bevorzugtes Material für die Armierungseinlage ist Aluminium. Wie den Figuren zu entnehmen ist, weist das Rastprofil 6 im Querschnitt eine winklige U-Form auf. Hierdurch stehen der motorseitige Klemmschenkel 20 des Rastprofils 6 sowie der innenraumseitige Klemmschenkel 21 des Rastprofils 6 senkrecht auf dem Klemmkanalboden 22. Insgesamt gewährleistet diese konstruktive Gestaltung einen möglichst großen Montagehebel hinsichtlich des Rastprofils 6 und damit die gewünschte Nachgiebigkeit des Rastprofils 6, was sich vorteilhaft auf die erforderliche Montagekraft beim Einrastvorgang auswirkt. Die winklige U-Form ermöglicht ferner eine niedrige Einbauhöhe h von 4 bis 8 mm zwischen unterer Oberfläche 5 der Scheibe 2 und der Unterseite des Halteschenkels 4.

Beim Anschluss der Wasserkastenabdeckung 1 an die Windschutzscheibe des Kraftfahrzeuges wird zunächst das Halteprofil 3 am unteren Randbereich der Windschutzscheibe 2 befestigt. Hierzu bilden der Halteschenkel 4 und der starre Stützkörper 8 des Halteprofils 3 gemeinsam eine formstabile L-förmige Aufnahme für den unteren Randbereich der Windschutzscheibe 2. Bei Montage des Halteprofils 3 an der Windschutzscheibe 2 wird der Stützkörper 8 zwecks Herstellung einer sicheren Abdichtung des Übergangs zur Scheibe 2 gegen den unteren Scheibenrand 15 gepresst und der Halteschenkel 4 an der unteren Oberfläche 5 der Scheibe 2 mittels eines Klebstoffstreifens 23 befestigt. Anschließend wird zunächst die Windschutzscheibe 2 am Kraftfahrzeug montiert. Bei der Endmontage erfolgt schließlich die Anbindung der Wasserkastenabdeckung 1 an die Windschutzscheibe 2. Hierzu wird durch ein Einrasten des Rastelementes 7 in das Rastprofil 6 die Wasserkastenabdeckung 1 an die Windschutzscheibe 2 angeschlossen. Der Stützkörper 8 weist die im montierten Zustand am Rastelement 7 anliegende Anlagefläche 9 und die der Oberkante 10 der Wasserkastenabdeckung 1 unmittelbar benachbarte und dieser Oberkante 10 zugewandte Stirnfläche 11 auf, wobei diese beiden Flächen 9, 11 mit dem Abstandsmaß A parallel zur Halteschenkelebene x voneinander beabstandet sind. Aufgrund entsprechender Dimensionierung und des innerhalb des Stützkörpers 8 angeordneten Armierungselementes 14 ist der Stützkörper als starres Element ausgebildet, derart dass das Abstandsmaß A aufgrund der zur ordnungsgemäßen Montage des Halteprofils 3 an der Windschutzscheibe 2 erforderlichen Anpresskraft um weniger als 15 % auf das Abstandsmaß A' reduziert wird (wobei diese Anpresskraft ohne weiteres von der erwähnten Kraft F = 100 N / 50 mm abweichen kann) . Hierdurch bleibt die Geometrie des Halteprofils 3 auch nach der Montage des Halteprofils 3 an der Windschutzscheibe 2 praktisch uneingeschränkt erhalten, so dass ein auslegungskonformer Rastvorgang sichergestellt ist und es nicht zu einer Beeinträchtigung des Montagevorgangs aufgrund eines abgekippten Stützkörpers 8 kommt. Während der Montage drückt die Wasserkastenabdeckung 1 erfindungsgemäß nicht gegen die obere Dichtlippe 12, so dass nach der Montage der bereits beschriebene Spalt mit der Breite s zwischen diesen beiden Komponenten 1,12 verbleibt. Dies hat zur Folge, dass im Ausführungsbeispiel das Einrasten des Rastelementes 7 im Rastprofil 6 mit einer Kraft F' senkrecht zur Halteschenkelebene x von weniger als 30 N / 50 mm (= 6 N / cm) Halteprofillänge erfolgen kann. Die Demontagekraft ist hingegen - bedingt durch die konstruktive Gestaltung des Rastprofils 6 - deutlich höher als die Montagekraft, im Ausführungsbeispiel > 60 N / 50 mm (= 12 N / cm) Halteprofillänge.

## Patentansprüche

1. Abdichtungsprofil zum Anschluss einer Wasserkastenabdeckung (1) an eine Scheibe (2) eines Kraftfahrzeuges mit einem Halteprofil (3) aufweisend
- einen Halteschenkel (4), der im Montagezustand an der unteren Oberfläche (5) der Scheibe (2) anliegt,
- ein Rastprofil (6) zur Aufnahme eines Rastelements (7) der Wasserkastenabdeckung (1) und
- einen im Montagezustand zwischen Wasserkastenabdeckung (1) und Scheibe (2) angeordneten Stützkörper (8),
wobei der Stützkörper (8) eine im Montagezustand am Rastelement (7) anliegende Anlagefläche (9) und eine im Montagezustand der Oberkante (10) der Wasserkastenabdeckung (1) unmittelbar benachbarte und dieser Oberkante (10) zugewandte Stirnfläche (11) aufweist, wobei im unmontierten Zustand Anlagefläche (9) und Stirnfläche (11) ein minimales Abstandsmaß (A) parallel zur Halteschenkelebene (x) aufweisen, **dadurch gekennzeichnet, dass** der Stützkörper (8) im Anschlussbereich zum Halteschenkel (4) eine Dicke (d) von mindestens 1,3 mm aufweist und derart massiv ausgebildet ist, dass ein gedachter Zylinder (B) mit einem Durchmesser (D) von 1,5 mm vom Stützkörper (8) vollständig umhüllt wird, und der Stützkörper (8) somit aufgrund entsprechender Dimensionierung als derart starres Element ausgebildet ist, dass sich das Abstandsmaß (A) bei einem Anpressen des Stützkörpers (8) an den unteren Scheibenrand (15) mit einer Kraft (F) von 100 N / 50 mm Halteprofillänge um weniger als 30 % auf das Abstandsmaß (A') reduziert, wodurch Halteschenkel (4) und Stützkörper (8) gemeinsam eine formstabile L-förmige Aufnahme für den unteren Randbereich der Scheibe (2) bilden, so dass die konstruktive Auslegung von Rastprofil (6) und Stützkörper (8) auch jener Gestalt dieser Elemente (6, 8) entspricht, welche tatsächlich bei der Montage der Wasserkastenabdeckung (1) vorliegt und damit ein leichtes Einrasten des Rastelements (7) im Rastprofil (6) gewährleistet ist.

2. Abdichtungsprofil nach Anspruch 1, **dadurch gekennzeichnet, dass** der Stützkörper (8) als balliges Element ohne Auskehlung im Rastbereich (16) ausgebildet ist.

3. Abdichtungsprofil nach Anspruch 1 oder 2, **dadurch gekennzeichnet, dass** innerhalb des Stützkörpers (8) ein Armierungselement (14) vorgesehen ist und dass das Armierungselement (14) als, insbesondere U- oder V-förmige, Metalleinlage oder als faserverstärktes Kunststoffprofil ausgebildet ist.

4. Abdichtungsprofil nach einem der Ansprüche 1 bis 3, **dadurch gekennzeichnet, dass** der Stützkörper (8) im Anschlussbereich zum Halteschenkel (4) eine Dicke (d) von mindestens 1,5 mm, vorzugsweise mindestens 1,7 mm, aufweist.

5. Abdichtungsprofil nach einem der Ansprüche 1 bis 4, **dadurch gekennzeichnet, dass** der Stützkörper (8) derart massiv ausgebildet ist, dass ein gedachter Zylinder (B) mit einem Durchmesser (D) von 2 mm vom Stützkörper (8) vollständig umhüllt wird.

6. Abdichtungsprofil nach einem der Ansprüche 1 bis 5, **dadurch gekennzeichnet, dass** Halteschenkel (4) und Rastprofil (6) über eine gemeinsame Armierungseinlage (17) miteinander verbunden sind, wobei die Armierungseinlage (17) im Bereich des Rastprofils (6) lediglich bereichsweise von Kunststoffmaterial umspritzt ist.

7. Abdichtungsprofil nach Anspruch 6, **dadurch gekennzeichnet, dass** im inneren Bodenbereich des Rastprofils (6) eine separate Kunststoffeinlage (18) vorgesehen ist.

8. Abdichtungsprofil nach einem der Ansprüche 1 bis 7, **dadurch gekennzeichnet, dass** das Rastprofil (6) im Querschnitt eine winklige U-Form aufweist.

9. Verfahren zum Anschluss einer Wasserkastenabdeckung (1) an eine Scheibe (2) eines Kraftfahrzeuges,
- wobei zunächst ein Halteprofil (3) am unteren Randbereich der Scheibe (2) befestigt wird,
- wobei hierzu ein Halteschenkel (4) und ein starrer Stützkörper (8) des Halteprofils (3) gemeinsam eine formstabile L-förmige Aufnahme für den unteren Randbereich der Scheibe (2) bilden,
- wobei zur Montage des Halteprofils (3) an der Scheibe (2) der Stützkörper (8) gegen den unteren Rand (15) der Scheibe (2) gepresst und der Halteschenkel (4) an der unteren Oberfläche (5) der Scheibe (2) befestigt wird,
- wobei danach durch ein Einrasten eines Rastelementes (7) der Wasserkastenabdeckung (1) in ein Rastprofil (6) des Halteprofils (7) die Wasserkastenabdeckung (1) an die Scheibe (2) angeschlossen wird,
- wobei der Stützkörper (8) im montierten Zustand eine am Rastelement (7) anliegende erste Anlagefläche (9) und eine im Montagezustand der Oberkante (10) der Wasserkastenabdeckung (1) unmittelbar benachbarte und dieser Oberkante (10) zugewandte Stirnfläche (11) aufweist, wobei Anlagefläche (9) und Stirnfläche (11) im unmontierten Zustand des Halteprofils (3) ein minimales Abstandsmaß (A) parallel zur Halteschenkelebene (x) aufweisen und
- wobei der Stützkörper (8) im Anschlussbereich zum Halteschenkel (4) eine Dicke (d) von mindestens 1,3 mm aufweist und derart massiv ausgebildet ist, dass ein gedachter Zylinder (B) mit einem Durchmesser (D) von 1,5 mm vom Stützkörper (8) vollständig umhüllt wird, und der Stützkörper (8) somit aufgrund entsprechender Dimensionierung als starres Element ausgebildet ist, derart dass das Abstandsmaß (A) aufgrund der zur ordnungsgemäßen Montage des Halteprofils (3) an der Scheibe (2) erforderlichen Anpresskraft um weniger als 30 % auf das Abstandsmaß (A') reduziert wird, so dass die konstruktive Auslegung von Rastprofil (6) und Stützkörper (8) auch jener Gestalt dieser Elemente (6, 8) entspricht, welche tatsächlich bei der Montage der Wasserkastenabdeckung (1) vorliegt, wodurch ein leichtes Einrasten des Rastelements (7) im Rastprofil (6) gewährleistet ist,
- wobei das Einrasten des Rastelementes (7) im Rastprofil (6) mit einer Kraft (F') senkrecht zur Halteschenkelebene (x) von weniger als 100 N / 50 mm Halteprofillänge erfolgt.

## Claims

1. Sealing profile for connecting a water tank cover (1) to a window pane (2) of a motor vehicle with a holding profile (3), comprising:
- a holding leg (4) which, in the mounted state, rests against the lower surface (5) of the window pane (2),
- a latching profile (6) for accommodating a latching element (7) of the water tank cover (1) and
- a supporting body (8) arranged between the water tank cover (1) and the pane (2), in the mounted state,
wherein the supporting body (8) comprises an abutment surface (9) resting against the latching element (7) in the mounted state, and a front surface (11) directly adjacent the upper edge (10) and facing the upper edge (10) of the water tank cover (1) in the mounted state, wherein in the unmounted state, abutment surface (9) and front surface (11) have a minimum distance (A) parallel to the holding leg plane (x),
**characterized in that** the supporting body (8), in the connecting region to the holding leg (4), has a thickness (d) of at least 1,3 mm and is formed to be solid in such a way, that a virtual cylinder (B) with a diameter (D) of 1.5 mm is completely enclosed by the supporting body (8), and thus the supporting body (8), due to a corresponding dimensioning, is configured as a rigid element in such a way, that the distance (A), when pressing the supporting body (8) with a force (F) of 100 N / 50 mm holding profile length against the lower pane edge (15), is reduced by less than 30 % to the distance (A'), whereby holding leg (4) and supporting body (8) together form a shape-retaining, L-shaped receptacle for the lower edge region of the window pane (2), so that the structural design of latching profile (6) and supporting body (8) also corresponds to the appearance of said elements (6, 8) that is actually present during the mounting of the water tank cover (1), and therefore ensures an easy latching of the latching element (7) in the latching profile (6).

2. Sealing profile according to claim 1, **characterized in that** the supporting body (8) is formed as a ball-type element without groove in the latching region (16).

3. Sealing profile according to claim 1 or 2, **characterized in that** a reinforcing element (14) is provided inside the supporting body (8) and that the reinforcing element (14) is configured as an, in particular U-shaped or V-shaped metal insert, or as a fiber-reinforced plastic material profile.

4. Sealing profile according to one of claims 1 to 3, **characterized in that** the supporting body (8) has a thickness (d) of at least 1.5 mm, preferably at least 1.7 mm in the connecting region towards the holding leg (4).

5. Sealing profile according to one of claims 1 to 4, **characterized in that** the supporting body (8) is formed to be solid in such a way, that an imaginary cylinder (B) having a diameter (D) of 2 mm is completely enclosed by the supporting body (8).

6. Sealing profile according to one of claims 1 to 5, **characterized in that** the holding leg (4) and the latching profile (6) are connected to one another via a common reinforcing insert (17), wherein, in the region of the latching profile (6), the reinforcing insert (17) is overmolded with plastic material only in regions.

7. Sealing profile according to claim 6, **characterized in that** a separate plastic material insert (18) is provided in the inner bottom region of the latching profile (6).

8. Sealing profile according to one of claims 1 to 7, **characterized in that** the latching profile (6) has an angular U-shape in the cross-section.

9. A method for connecting a water tank cover (1) to a window pane (2) of a motor vehicle,
- wherein firstly a holding profile (3) is fastened to the lower edge region of the window pane (2),
- wherein, for this purpose, a holding leg (4) and a rigid supporting body (8) of the holding profile (3) together form a dimensionally-stable, L-shaped receptacle for the lower edge region of the window pane (2),
- wherein for the mounting of the holding profile (3) to the window pane (2), the supporting body (8) is pressed against the lower edge (15) of the window pane (2) and the holding leg (4) is fastened to the lower surface (5) of the window pane (2),
- wherein thereafter, the water tank cover (1) is connected to the window pane (2) by latching a latching element (7) of the water tank cover (1) into a latch profile (6) of the holding profile (7),
- wherein the supporting body (8) comprises a first abutment surface (9) resting against the latching element (7) in the mounted state, and a front surface (11) directly adjacent of the upper edge (10) and facing the upper edge (10) of the water tank cover (1) in the mounted state, wherein in the unmounted state of the holding profile (3), abutment surface (9) and front surface (11) have a minimum distance (A) parallel to the holding leg plane (x), and
- wherein the supporting body (8), in the connecting region to the holding leg (4) has a thickness (d) of at least 1,3 mm and is formed to be solid in such a way, that a virtual cylinder (B) with a diameter (D) of 1.5 mm is completely enclosed by the supporting body (8), and thus the supporting body (8), due to a corresponding dimensioning, is configured as a rigid element in such a way, that the distance (A), due to the pressing force required for mounting is reduced by less than 30 % to the distance (A'), so that the structural design of latching profile (6) and supporting body (8) also corresponds to the appearance of these elements (6, 8) that is actually present when mounting the water tank cover (1), whereby an easy latching of the latching element (7) in the latching profile (6) is ensured,
- wherein the latching of the latching element (7) in the latching profile (6) occurs with a force (F') perpendicular to the holding leg plane (x) of less than 100 N / 50 mm holding profile length.

## Revendications

1. Profil d'étanchéité pour le raccordement d'un couvercle de boîte à eau (1) à une vitre (2) d'un véhicule automobile avec un profil de maintien (3) comprenant
- une branche de maintien (4), qui repose à un état de montage sur la surface inférieure (5) de la vitre (2),
- un profil d'encliquetage (6) pour recevoir un élément d'encliquetage (7) du couvercle de boîte à eau (1) et
- un corps de support (8) disposé, à un état de montage, entre un couvercle de boîte à eau (1) et une vitre (2),
dans lequel le corps de support (8) présente une surface d'appui (9) à l'état monté reposant sur l'élément d'encliquetage (7) et une surface frontale (11) directement adjacente au le bord supérieur (10) du couvercle de boîte à eau (1) à l'état monté et tournée vers ce bord supérieure (10), dans lequel à l'état non monté la surface d'appui (9) et la surface frontale (11) présentent une mesure de distance minimale (A) parallèle au plan de la branche de maintien (x),
**caractérisé en ce que** le corps de support (8) dans la zone de raccordement à la branche de maintien (4) présente une épaisseur (d) d'au moins 1,3 mm et est configuré solidement de telle manière à ce que un cylindre imaginaire (B) avec un diamètre (D) de 1,5 mm est enveloppé entièrement par le corps de support (8), et le corps de support (8) est ainsi formé dû à une dimension respective comme élément rigide de telle manière, que la mesure de distance (A) lors d'un pressage du corps d'appui (8) contre le bord de vitre (15) inférieure avec une force (F) de 100N / 50mm de longueur de profil de maintien est réduite à moins de 30% à une mesure de distance (A'), moyennant quoi branche de maintien (4) et corps d'appui (8) ensemble forme un logement en forme de L indéformable pour la zone de bord inférieure de la vitre (2), de sorte que la conception de construction du profil d'encliquetage (6) et du corps de support (8) aussi correspond à cette apparence de ces éléments (6,8), qui est réellement présent au montage du couvercle de boîte à eau (1) et pour qu'un encliquetage facile de l'élément d'encliquetage (7) dans le profil d'encliquetage (7) soit assuré.

2. Profil d'étanchéité selon la revendication 1, **caractérisé en ce que** le corps de support (8) est formé comme élément bombé sans gorge dans la zone d'encliquetage (16).

3. Profil d'étanchéité selon la revendication 1 ou 2, **caractérisé en ce que** à l'intérieure du corps de support (8) est prévu un élément d'armature (14) et **en ce que** l'élément d'armature (14) est configuré, comme insert métallique notamment en forme de U ou V ou comme profil en matière synthétique renforcé par fibre.

4. Profil d'étanchéité selon l'une quelconque des revendication 1 à 3, **caractérisé en ce que** le corps de support (8) présente une épaisseur (d) de au moins 1,5 mm, de préférence au moins 1,7 mm dans la zone de raccordement à la branche de maintien (4).

5. Profil d'étanchéité selon l'une quelconque des revendications 1 à 4, **caractérisé en ce que** le corps de support (8) est configuré solidement de telle manière qu'un cylindre imaginaire (B) avec un diamètre (D) de 2 mm est complètement enveloppé par le corps de support (8).

6. Profil d'étanchéité selon l'une quelconque des revendications 1 à 5, **caractérisé en ce que** la branche de maintien (4) et le profil d'encliquetage (6) sont reliés l'un à l'autre par une insertion d'armature commun (17), dans lequel l'insertion d'armature dans la zone du profil d'encliquetage (6) étant surmoulée en matière synthétique seulement par zones.

7. Profil d'étanchéité selon la revendication 6, **caractérisé en ce que** dans la zone intérieure du fond du profil d'encliquetage (6) est prévu un insert en matière synthétique (18) distinct.

8. Profil d'étanchéité selon l'une quelconque des revendications 1 à 7, **caractérisé en ce que** le profil d'encliquetage (6) présente une forme de U angulaire dans une section transversale.

9. Procédé pour le raccordement d'un couvercle de boîte à eau (1) à une vitre (2) d'un véhicule automobile,
- dans lequel tout d'abord un profil de maintien (3) soit fixé à la zone de bord inférieure de la vitre (2),
- dans lequel dans ce but une branche de maintien (4) et un corps de support (8) rigide du profil de maintien (3) forment ensemble un logement en forme de L indéformable pour la zone de bord inférieure de la vitre (2),
- dans lequel pour le montage du profil de maintien (3) à la vitre (2) le corps de support (8) est pressé contre le bord inférieure (15) de la vitre (2) et que la branche de maintien (4) est fixée à une surface inférieure (5) de la vitre (2),
- dans lequel ensuite au moyen d'un encliquetage d'un élément d'encliquetage (7) d'un couvercle de boîte à eau (1) dans un profil d'encliquetage (6) du profil de maintien (7), le couvercle de boîte à eau (1) est raccordé à la vitre (2),
- dans lequel le corps de support (8) à l'état monté, présente une première surface d'appui (9) reposant à l'élément d'encliquetage (7) et une surface frontale (11) directement adjacente au bord supérieur (10) du couvercle de boîte à eau (1) en l'état de montage et tournée vers ce bord supérieur (10), dans lequel la surface d'appui (9) et la surface frontale (11) présentent à un état non monté du profil de maintien (3) une mesure de distance (A) minimale, parallèle au plan de la branche de maintien (x) et
- dans lequel le corps de support (8) dans une zone de raccordement au branche de maintien (4) présente une épaisseur d'au moins 1,3 mm et étant configuré solidement de telle manière que un cylindre imaginaire (B) avec un diamètre (D) de 1,5 mm est enveloppé complètement par le corps de support (8), et le corps de support (8) est ainsi, dû à une dimension respective, configuré comme élément rigide, de sorte que la mesure de distance (A) est réduite à moins de 30% à une mesure de distance (A') dû à la force de pressage nécessaire pour le montage propre du profil de maintien (3) à la vitre (2), en ce que la conception de construction du profil d'encliquetage (6) et du corps de support (8) correspond à cette apparence de ces éléments (6, 8), qui est réellement présent au montage du couvercle de boîte à eau (1), moyennant quoi un encliquetage léger de l'élément d'encliquetage (7) dans le profil d'encliquetage (6) est assuré.
- dans lequel l'encliquetage de l'élément d'encliquetage (7) dans le profil d'encliquetage (6) s'effectue avec une force (F') perpendiculaire au plan de la branche de maintien (x) avec une longueur de profil de maintien de moins de 100N/ 50mm.
